# EUROPEAN PATENT APPLICATION

(11) **EP 4 804 253 A2**
(43) Date of publication of application: **09.09.2026**
(21) Application number: 26193530.8
(22) Date of filing: 31.08.2023
(51) Int. Cl.: H01M 4/48

(54) **NON-AQUEOUS ELECTROLYTE AND LITHIUM SECONDARY BATTERY INCLUDING THE SAME**

(30) Priority: 31.08.2022 KR 20220110317
(62) Document number(s) of the earlier application(s) in accordance with Art. 76 EPC: 23860912.7 / 4 510 281
(71) Applicant: LG Energy Solution, Ltd., Seoul 07335 (KR)
(72) Inventor: LEE, Kyung Mi, 34122 Daejeon (KR); LEE, Jung Min, 34122 Daejeon (KR); JI, Su Hyeon, 34122 Daejeon (KR); YEOM, Chul Eun, 34122 Daejeon (KR); LEE, Chul Haeng, 34122 Daejeon (KR)
(74) Representative: Hoffmann Eitle

(57) **Abstract**

The present invention provides a non-aqueous electrolyte including a lithium salt, an organic solvent, and an additive, wherein the additive includes a compound represented by Formula 1 below and lithium difluoro(oxalato)borate (LiODFB), and the organic solvent includes ethylene carbonate (EC), propylene carbonate (PC), ethylene propionate (EP), and propyl propionate (PP).

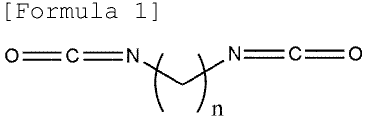

In Formula 1 above, n is an integer of 3 to 10.

## Description

### TECHNICAL FIELD

### Cross-reference to Related Applications

This application claims the benefit of Korean Patent Application No. 10-2022-0110317, filed on August 31, 2022, in the Korean Intellectual Property Office, the disclosure of which is incorporated herein in its entirety by reference.

### Technical Field

The present invention relates to a non-aqueous electrolyte and a lithium secondary battery including the same.

### BACKGROUND ART

Recently, attempts have been made to drive secondary batteries at higher voltages for the higher capacity of lithium secondary batteries.

However, when a secondary battery is driven under a high voltage, as charge and discharge proceed, films or electrode surface structures formed on the surfaces of positive/negative electrodes are deteriorated due to a side reaction caused by the deterioration of an electrolyte, so that transition metal ions may be eluted from the surface of the positive electrode. The transition metal ions eluted as described above are electro-deposited on the negative electrode and degrade the passivation capability of SEI, thereby causing a problem in that the negative electrode is deteriorated.

Such a deterioration phenomenon of a secondary battery tends to accelerate as the potential of a positive electrode increases, or when the battery is exposed to high temperatures, resulting in causing a problem in which cycle properties of the secondary battery are deteriorated due to the deterioration phenomenon.

In addition, when a lithium secondary battery is continuously used for a long period of time or left to stand at high temperatures, a gas is generated and causes a so-called swelling phenomenon of increasing the thickness of a battery, and it is known that the amount of gas generated at this time depends on the state of SEI.

Therefore, in order to solve the above problems, research and development have been conducted on methods capable of suppressing the elution of transition metal ions from a positive electrode, reducing the destruction of a negative electrode SEI film, reducing the swelling phenomenon of a secondary battery, and increasing stability at high temperatures.

### DISCLOSURE OF THE INVENTION

### TECHNICAL PROBLEM

As a result of conducting multifaceted research to solve the above problems, the present invention provides a non-aqueous electrolyte capable of suppressing the deterioration of a positive electrode and reducing side reactions between the positive electrode and an electrolyte.

In addition, the present invention provides a lithium secondary battery including the non-aqueous electrolyte, thereby having improved overall performance with improved high-temperature cycle properties and high-temperature storage properties.

### TECHNICAL SOLUTION

In order to achieve the objects, the present invention provides a non-aqueous electrolyte including a lithium salt, an organic solvent, and an additive, wherein the additive includes a compound represented by Formula 1 below and lithium difluoro(oxalato)borate (LiODFB), and the organic solvent includes ethylene carbonate (EC), propylene carbonate (PC), ethylene propionate (EP), and propyl propionate (PP).

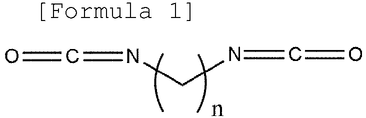

In Formula 1 above, n is an integer of 3 to 10.

### ADVANTAGEOUS EFFECTS

A non-aqueous electrolyte of the present invention includes a compound represented by Formula 1 above and lithium difluoro(oxalato)borate (LiODFB), and thus, may suppress the decomposition of a lithium salt, and suppress the collapse of a positive electrode caused by a by-product such as HF. In addition, the degradation in passivation capability of SEI at high temperatures may be suppressed to prevent the deterioration of a negative electrode.

Specifically, a combination of a diisocyanate-based compound of Formula 1 and lithium difluoro(oxalato)borate (LiODFB) may stabilize the electrolyte, and thus, may suppress a decomposition reaction of a carbonate-based solvent and a propionate-based solvent. In addition, in an environment in which a stable positive electrode film formed by the combination of the diisocyanate-based compound of Formula 1 and lithium difluoro(oxalato)borate (LiODFB) is sufficiently formed, ethylene propionate (EP) and propyl propionate (PP) are less reactive with oxygen de-intercalated from a positive electrode material, so that carbon dioxide, an oxidizing gas, is suppressed. As a result, in a lithium secondary battery including the non-aqueous electrolyte of the present invention, gas generation at high temperatures may be suppressed. That is, when the non-aqueous electrolyte of the present invention is used, the elution of a transition metal from a positive electrode is suppressed to maintain high high-temperature durability, so that high-temperature cycle properties and high-temperature storage properties are improved to implement a lithium secondary battery with improved overall performance.

### MODE FOR CARRYING OUT THE INVENTION

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

In the present specification, it should be understood that the terms "include," "comprise," or "have" are intended to specify the presence of stated features, numbers, steps, elements, or combinations thereof, but do not preclude the presence or addition of one or more other features, numbers, steps, elements, or combinations thereof.

In addition, in the present specification, it will be understood that in the description of "carbon atoms a to b" herein, "a" and "b" refer to the number of carbon atoms included in a specific functional group. That is, the functional group may include "a" to "b" number of carbon atoms. For example, an "alkylene group having 1 to 5 carbon atoms" refers to an alkylene group including carbon atoms with a carbon number of 1 to 5, that is, -CH₂-, -CH₂CH₂-, -CH₂CH₂CH₂-, -CH₂(CH₃)CH-, -CH(CH₃)CH₂-, -CH(CH₃)CH₂CH₂-, and the like.

In addition, in the present specification, alkyl groups may all be substituted or unsubstituted. Unless otherwise defined, the term "substituted" means that at least one hydrogen bonded to carbon is substituted with an element other than hydrogen, and for example, it means being substituted with an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a heterocycloalkyl group having 3 to 12 carbon atoms, a heterocycloalkenyl group having 3 to 12 carbon atoms, an aryloxy group having 6 to 12 carbon atoms, a halogen atom, a fluoroalkyl group having 1 to 20 carbon atoms, a nitro group, an aryl group having 6 to 20 carbon atoms, a heteroaryl group having 2 to 20 carbon atoms, a haloaryl group having 6 to 20 carbon atoms, or the like.

Hereinafter, the present invention will be described in more detail.

### Non-aqueous electrolyte

A non-aqueous electrolyte according to the present invention includes a lithium salt, an organic solvent, and an additive, wherein the additive may include a compound represented by Formula 1 below and lithium difluoro(oxalato)borate (LiODFB), and the organic solvent may include ethylene carbonate (EC), propylene carbonate (PC), ethylene propionate (EP), and propyl propionate (PP).

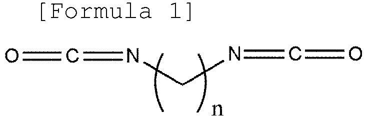

In Formula 1 above, n may be an integer of 3 to 10, and preferably, n of Formula 1 above may be an integer of 3 to 8.

The compound of Formula 1 is a compound in which an isocyanate group is substituted at an end, and may form a complex with a lithium salt to stabilize the lithium salt, and accordingly, may suppress the generation of a by-product such as HF. As a result, the elution of a transition metal, the elution of cobalt in particular, from a positive electrode may be suppressed. When the transition metal elution from a positive electrode is suppressed, the deterioration of the positive electrode is suppressed, so that cycle properties and storage properties may be improved. Since the deterioration of the positive electrode becomes more severe with higher temperatures, when the non-aqueous electrolyte of the present invention is used, cycle properties and storage properties at high temperatures may be improved.

Since the lithium difluoro(oxalato)borate (LiODFB) is capable of stabilizing a negative electrode interface through a rapid negative electrode reduction reaction, the cycle properties and storage properties at high temperatures may be improved.

In the non-aqueous electrolyte according to the present invention, the compound represented by Formula 1 above may be included in an amount of 0.1 parts by weight to 5 parts by weight, preferably 0.1 parts by weight to 3 parts by weight, and more preferably 0.1 parts by weight to 2 parts by weight, based on 100 parts by weight of the non-aqueous electrolyte. When the content of the compound of Formula 1 satisfies the above range, the effect of suppressing the elution of a transition metal from a positive electrode is sufficient, so that there is an effect in that lifespan properties and high-temperature storage properties at high temperatures are excellent.

In the non-aqueous electrolyte according to the present invention, the lithium difluoro(oxalato)borate (LiODFB) may be included in an amount of 0.1 parts by weight to 5 parts by weight, preferably 0.1 parts by weight to 3 parts by weight, and more preferably 0.1 parts by weight to 2 parts by weight, based on 100 parts by weight of the non-aqueous electrolyte. When the content of the LiODFB satisfies the above range, there is a sufficient change in negative electrode modification due to a rapid negative electrode reduction decomposition reaction in an activation step, so that there is an effect in that lifespan properties and high-temperature storage properties are excellent.

In the non-aqueous electrolyte solution of the present invention, the compound represented by Formula 1 and lithium difluoro(oxalato)borate (LiODFB) may be included at a weight ratio of 0.2 : 1 to 5 : 1, preferably 1 : 1 to 5 : 1, and most preferably 1 : 1 to 3 : 1. When an additive of Formula 1 and LiODFB are included in the above range, the pH of the electrolyte is within an appropriate range, and the decomposition of the lithium salt is appropriately suppressed, so that the elution of a transition metal, Co in particular, may be suppressed during a high-voltage charge or at high temperatures.

The non-aqueous electrolyte according to the present invention may include a lithium salt. The lithium salt is used as an electrolyte salt in a lithium secondary battery, and is used as a medium for transferring ions. Typically, the lithium salt may include Li⁺ as cations, and may include, as anions, at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, and SCN⁻.

Specifically, the non-aqueous electrolyte of the present invention may include LiPF₆ as the lithium salt. Additionally, the lithium salt may include a single material selected from the group consisting of LiCl, LiBr, LiI, LiBF₄, LiClO₄, LiB₁₀Cl₁₀, LiAlCl₄, LiAlO₂, LiCF₃SO₃, LiCH₃CO₂, LiCF₃CO₂, LiAsF₆, LiSbF₆, LiCH₃SO₃, LiN(SO₂F)₂(lithium bis(fluorosulfonyl)imide (LiFSI)), LiN(SO₂CF₂CF₃)₂(lithium bis(perfluoroethanesulfonyl)imide (LiBETI)), and LiN(SO₂CF₃)₂(lithium bis(trifluoromethane)insulfonyl)imide (LiTFSI)), or a mixture of two or more thereof. In addition to the above, any lithium salt typically used in an electrolyte of a lithium secondary battery may be used without limitation.

Although it may be suitably changed within a typical range in which a lithium salt may be used, in order to obtain an optimum effect of forming an anti-corrosive film on the surface of an electrode, the lithium salt may be included in the electrolyte at a concentration of 0.5 M to 5.0 M, preferably 1.0 M to 3.0 M, and more preferably 1.2 M to 2.0 M. When the concentration of the lithium salt satisfies the above range, the effect of improving cycle properties during high-temperature storage of a lithium secondary battery is sufficient, and the viscosity of the non-aqueous electrolyte is suitable, so that the wettability of the electrolyte may be improved.

The non-aqueous electrolyte according to the present invention may include an organic solvent containing ethylene carbonate (EC), propylene carbonate (PC), ethylene propionate (EP), and propyl propionate (PP). More preferably, the non-aqueous electrolyte according to the present invention may include an organic solvent composed of ethylene carbonate (EC), propylene carbonate (PC), ethylene propionate (EP), and propyl propionate (PP).

The ethylene carbonate (EC) and the propylene carbonate (PC) are high-viscosity organic solvents having a high dielectric constant, and thus, may dissociate a lithium salt well in an electrolyte. In an environment in which a stable positive electrode film formed by the combination of the diisocyanate-based compound of Formula 1 and lithium difluoro(oxalato)borate (LiODFB) is sufficiently formed, propyl propionate (PP) is less reactive with oxygen de-intercalated from a positive electrode material, so that carbon dioxide, an oxidizing gas, is suppressed. The ethylene propionate (EP) acts together with the propyl propionate (PP) in increasing lithium ion mobility, so that there is an effect of improving fast-charging performance.

The non-aqueous electrolyte of the present invention includes ethylene carbonate (EC), propylene carbonate (PC), ethylene propionate (EP), and propyl propionate (PP), and thus, may provide a non-aqueous electrolyte with sufficient ion conductivity. As a result, there is an effect in that long-term lifespan properties are excellent. Most preferably, the organic solvent included in the non-aqueous electrolyte of the present invention may be composed of ethylene carbonate (EC), propylene carbonate (PC), ethylene propionate (EP), and propyl propionate (PP).

The non-aqueous electrolyte of the present invention may include, as other organic solvents, at least one organic solvent selected from the group consisting of fluoro ethylene carbonate (FEC), 1,2-butylene carbonate, 2,3-butylene carbonate, 1,2-pentylene carbonate, 2,3-pentylene carbonate, and vinylene carbonate.

Meanwhile, if necessary, the organic solvent may additionally use any organic solvent commonly used in a non-aqueous electrolyte without limitation. For example, at least one organic solvent among an ether-based organic solvent, a glyme-based solvent, and a nitrile-based solvent may be additionally included.

As the ether-based solvent, any one selected from the group consisting of dimethyl ether, diethyl ether, dipropyl ether, methyl ethyl ether, methyl propyl ether, ethyl propyl ether, 1,3-dioxolane (DOL), and 2,2-bis (trifluoromethyl)-1,3-dioxolane (TFDOL), or a mixture of two or more thereof may be used, but the present invention is not limited thereto.

The glyme-based solvent is a solvent having a higher dielectric constant and lower surface tension than those of a linear carbonate-based organic solvent, and having less reactivity with a metal, and may include at least one selected from the group consisting of dimethoxyethane (glyme, DME), diethoxyethane, digylme, tri-glyme, and tetra-glyme (TEGDME), but is not limited thereto.

The nitrile-based solvent may be one or more selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, but is not limited thereto.

In addition, the non-aqueous electrolyte of the present invention may further include, if necessary, an electrolyte additive known in the art in the non-aqueous electrolyte to prevent the non-aqueous electrolyte from being decomposed in a high-output environment and causing a negative electrode to collapse, or to further improve low-temperature high-rate discharge properties, high-temperature stability, overcharge prevention, the effect of suppressing battery expansion at high temperatures, and the like.

Representative examples of the electrolyte additive may include at least one additive for forming an SEI film selected from the group consisting of a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound.

The cyclic carbonate-based compound may be vinylene carbonate (VC) or vinylethylene carbonate.

The halogen-substituted carbonate-based compound may be fluoroethylene carbonate (FEC).

The sultone-based compound may be at least one compound selected from the group consisting of 1,3-propane sultone (PS), 1,4-butane sultone, ethene sultone, 1,3-propene sultone (PRS), 1,4-butene sultone, and 1-methyl-1,3-propene sultone.

The sulfate-based compound may be ethylene sulfate (ESA), trimethylene sulfate (TMS) or methyl trimethylene sulfate (MTMS).

The phosphate-based compound may be one or more compound selected from lithium difluoro(bisoxalato)phosphate, lithium difluorophosphate, tetramethyl trimethyl silyl phosphate, trimethyl silyl phosphite, tris(2,2,2-trifluoroethyl)phosphate, and tris(trifluoroethyl)phosphite.

The borate-based compound may be tetraphenylborate, lithium oxalyldifluoroborate (LiODFB), and lithium bisoxalatoborate (LiB(C₂O₄)₂, LiBOB).

The nitrile-based compound may be at least one compound selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may be fluorobenzene, the amine-based compound may be triethanolamine, ethylene diamine, or the like, and the silane-based compound may be tetravinylsilane.

The lithium salt-based compound is a compound different from the lithium salt included in the non-aqueous electrolyte, and may be lithium difluorophosphate (LiDFP), LiPO₂F₂, LiBF₄, or the like.

Among the electrolyte additives, when a combination of vinylene carbonate (VC), 1,3-propane sultone (PS), ethylene sulfate (Esa), and lithium difluorophosphate (LiDFP) is included, it is possible to form a more robust SEI film on the surface of a negative electrode during an initial activation process of a secondary battery, and to suppress the generation of a gas which may be generated due to the decomposition of an electrolyte at high temperatures, thereby improving high-temperature stability of the secondary battery.

Meanwhile, two or more of the electrolyte additives may be mixed and used, and their content may be 0.050 to 20 wt%, specifically 0.10 to 15 wt%, preferably 0.30 to 10 wt%, based on the total weight of the non-aqueous electrolyte. When the content of the electrolyte additives satisfies the above range, there is a more excellent effect of improving ion conductivity and cycle properties.

### Lithium secondary battery

The present invention also provides a lithium secondary battery including the non-aqueous electrolyte.

Specifically, the lithium secondary battery includes a positive electrode including a positive electrode active material, a negative electrode including a negative electrode active material, a separator interposed between the positive electrode and the negative electrode, and the above-described non-aqueous electrolyte.

At this time, the lithium secondary battery of the present invention may be manufactured by a common method known in the art. For example, the lithium secondary battery of the present invention may be manufactured by forming an electrode assembly in which a positive electrode, a negative electrode, and a separator between the positive electrode and the negative electrode are sequentially stacked, followed by inserting the electrode assembly in a battery case, and then injecting the non-aqueous electrolyte according to the present invention thereto.

The lithium secondary battery of the present invention has an upper limit of operating voltage of 4.47 V or greater, and may be driven at a high voltage. The upper limit voltage of operating voltage refers to a charge final voltage at the time of charging/discharging the lithium secondary battery, for example, a cut-off voltage under CC-CV charge conditions.

The lithium secondary battery of the present invention is characterized by having a small amount of Co elution, even when driven at a high voltage. Specifically, the lithium secondary battery of the present invention may satisfy Equation (1) below. ${D}_{t} / {D}_{0} < 5$

In Equation 1 above, Dₜ is an amount of Co elution in the non-aqueous electrolyte measured after the lithium secondary battery is stored at a high temperature of 85 °C for 8 hours, and D₀ is an amount of Co elution in the non-aqueous electrolyte of the lithium secondary battery before the storage at a high temperature.

Preferably, the lithium secondary battery of the present invention may have a Dₜ/D₀ value of 1.5 to 3.5, most preferably 1.5 to 2.5.

In addition, the lithium secondary battery of the present invention is characterized by not having an excessively acidic pH, even when driven at a high voltage. Specifically, the lithium secondary battery of the present invention may have a pH of the non-aqueous electrolyte of greater than 4, preferably a pH of 4.2 to 5, which is measured after 1 week of storage at 60 °C.

### (1) Positive electrode

The positive electrode may be manufactured by coating a positive electrode mixture slurry including a positive electrode active material, a binder, a conductive material, a solvent, and the like on a positive electrode current collector.

The positive electrode current collector is not particularly limited as long as it has conductivity without causing a chemical change in the battery. For example, stainless steel, aluminum, nickel, titanium, fired carbon, or aluminum or stainless steel that is surface-treated with one of carbon, nickel, titanium, silver, and the like may be used.

The positive electrode active material is a compound capable of reversible intercalation and de-intercalation of lithium, and specifically, may include a lithium metal oxide including one or more metals, such as cobalt, manganese, nickel, and aluminum, and lithium. More specifically, the lithium metal oxide may be a lithium-manganese-based oxide (e.g., LiMnO₂, LiMn₂O₄, etc.), a lithium-cobalt-based oxide (e.g., LiCoO₂, etc.), a lithium-nickel-based oxide (e.g., LiNiO₂, etc.), a lithium-nickel-manganese-based oxide (e.g., LiNi_{1-Y}Mn_{Y}O₂ (wherein 0<Y<1), LiMn_{2-Z}Ni_{Z}O₄ (wherein 0<Z<2), etc.), a lithium-nickel-cobalt-based oxide (e.g., LiNi_{1-Y1}Co_{Y1}O₂ (wherein 0<Y1<1), etc.), a lithium-manganese-cobalt-based oxide (e.g., LiCo_{1-Y2}Mn_{Y2}O₂ (wherein 0<Y2<1), LiMn_{2-Z1}Co_{Z1}O₄ (wherein 0<Z1<2), etc.), a lithium-nickel-manganese-cobalt-based oxide (e.g., Li(NiₚCo_{q}Mnᵣ)O₂ (wherein 0<p<1, 0<q<1, 0<r<1, and p+q+r=1) or Li(Niₚ₁Co_{q1}Mnᵣ₁)O₄ (wherein 0<p1<2, 0<q1<2, 0<r1<2, and p1+q1+r1=2), etc.), or a lithium-nickel-cobalt-transition metal(M) oxide (e.g., Li(Niₚ₂Co_{q2}Mnᵣ₂Mₛ₂)O₂ (wherein M is selected from the group consisting of Al, Fe, V, Cr, Ti, Ta, Mg, and Mo, and p2, q2, r2, and s2 are each an atomic fraction of stand-alone elements, wherein 0<p2<1, 0<q2<1, 0<r2<1, 0<s2<1, and p2+q2+r2+s2=1), etc.) and the like, and any one thereof or amixture of two or more thereof may be included.

Among these, due to the fact that the capacity properties and stability of a battery may be increased, the lithium metal oxide may be LiCoO₂, LiMnO₂, LiNiO₂, a lithium nickel-manganese-cobalt oxide (e.g., Li(Ni_{1/3}Mn_{1/3}Co_{1/3})O₂, Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, Li(Ni_{0.8}Mn_{0.1}Co_{0.1})O₂, etc.), a lithium nickel cobalt aluminum oxide (e.g., Li(Ni_{0.8}Co_{0.15}Al_{0.05})O₂, etc.), or the like, and any one thereof or a mixture of two or more thereof may be used.

Among these, the positive electrode active material may be a lithium cobalt-based oxide represented by Formula 2 below.

[Formula 2] Liₐ₁Co₁₋ₓ₁M¹ₓ₁O_{2+β}

In Formula 2 above, M¹ includes one or more selected from the group consisting of Al, B, Ba, Ca, Zr, Ti, Mg, Ta, Nb, Sr, W, and Mo, and 0.9<a1≤1.1, 0≤x1≤0.2, and 0≤β≤0.02.

The positive electrode active material may be included in an amount of 60 wt% to 99 wt%, preferably 70 wt% to 99 wt%, more preferably 80 wt% to 98 wt%, based on the total weight of solids excluding the solvent in the positive electrode mixture slurry.

The binder is a component for assisting in coupling between an active material, a conductive material, etc., and coupling to a current collector.

Examples of the binder may include polyvinylidene fluoride, polyvinyl alcohol, starch, hydroxypropyl cellulose, regenerated cellulose, polyvinylpyrrolidone, polytetrafluoroethylene, polyethylene (PE), polypropylene, an ethylene-propylene-diene monomer, a sulfonated ethylene-propylene-diene monomer, styrene-butadiene rubber, fluorine rubber, and various copolymers thereof.

Typically, the binder may be included in an amount of 1 to 20 wt%, preferably 1 to 15 wt%, more preferably 1 wt% to 10 wt%, based on the total weight of solids excluding the solvent in the positive electrode mixture slurry.

The conductive material is a component for further improving the conductivity of the positive electrode active material, and may be added in an amount of 1 to 20 wt% based on the total weight of solids in the positive electrode mixture slurry. The conductive material is not particularly limited as long as it has conductivity without causing a chemical change in the battery, and for example, carbon powder such as carbon black, acetylene black, Ketjen black, channel black, furnace black, lamp black, or thermal black; graphite powder such as natural graphite, artificial graphite, graphite, or the like, which has a very developed crystal structure; conductive fiber such as carbon fiber or metal fiber; conductive powder such as fluorocarbon powder, aluminum powder, and nickel powder; a conductive whisker such as zinc oxide and potassium titanate; a conductive metal oxide such as titanium oxide; a conductive material such as a polyphenylene derivative, and the like may be used.

Typically, the binder may be included in an amount of 1 to 20 wt%, preferably 1 to 15 wt%, more preferably 1 wt% to 10 wt%, based on the total weight of solids excluding the solvent in the positive electrode mixture slurry.

The solvent may include an organic solvent such as N-methyl-2-pyrrolidone (NMP), and may be used in an amount such that a preferred viscosity is achieved when the positive electrode active material, and selectively a binder, a conductive material, and the like are included. For example, the solvent may be included in an amount such that the concentration of a solid including the positive electrode active material, and selectively the binder and the conductive material is 50 wt% to 95 wt%, preferably 70 wt% to 95 wt%, more preferably 70 wt% to 90 wt%.

### (2) Negative electrode

The negative electrode may be manufactured by, for example, coating a negative electrode mixture slurry containing a negative electrode active material, a binder, a conductive material, a solvent, and the like on a negative electrode current collector, or a graphite electrode made of carbon (C) or a metal itself may be used as the negative electrode.

For example, when the negative electrode is manufactured by coating a negative electrode mixture slurry on a negative electrode current collector, the negative electrode current collector typically has a thickness of 3 to 500 µm. The negative electrode current collector is not particularly limited as long as it has high conductivity without causing a chemical change in the battery, and for example, copper, stainless steel, aluminum, nickel, titanium, fired carbon, copper or stainless steel that is surface-treated with one of carbon, nickel, titanium, silver, and the like, an aluminum-cadmium alloy, and the like may be used. Also, as in the case of the positive electrode current collector, microscopic irregularities may be formed on the surface of the negative electrode current collector to improve the binding force of a negative electrode active material, and the negative electrode current collector may be used in various forms of such as a film, a sheet, a foil, a net, a porous body, a foam body, and a non-woven fabric body.

In addition, the negative electrode active material may include at least one selected from the group consisting of a lithium metal, a carbon material capable of reversible intercalation/de-intercalation of lithium ions, a metal or an alloy of the metal and lithium, a metal composite oxide, a material capable of doping and undoping lithium, and a transition metal oxide.

As the carbon material capable of reversible intercalation/de-intercalation of lithium ions, a carbon-based negative electrode active material commonly used in a lithium ion secondary battery may be used without particular limitation, and representative examples thereof may include a crystalline carbon, an amorphous carbon, or a combination thereof. Examples of the crystalline carbon may include graphite such as an irregular, planar, flaky, spherical, or fibrous natural graphite or artificial graphite, and examples of the amorphous carbon may include soft carbon (low-temperature fired carbon) or hard carbon, mezophase pitch carbides, fired cokes, and the like.

As the metal or the alloy of the metal and lithium, a metal selected from the group consisting of Cu, Ni, Na, K, Rb, Cs, Fr, Be, Mg, Ca, Sr, Si, Sb, Pb, In, Zn, Ba, Ra, Ge, Al, and Sn, or an alloy of the metal and lithium may be used.

As the metal composite oxide, one selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃(0≤x≤1), LiₓWO₂(0≤x≤1), and SnₓMe₁₋ₓMe'_{y}O_{z}(Me: Mn, Fe, Pb, Ge; Me': Al, B, P, Si, elements in Group 1, Group 2, and Group 3 of the periodic table, halogen; 0<x≤1; 1≤y≤3; 1≤z≤8) may be used.

The material capable of doping and undoping lithium may be Si, SiOₓ(0<x≤2), an Si-Y alloy (wherein Y is an element selected from the group consisting of an alkali metal, an alkaline earth metal, a Group 13 element, a Group 14 element, a transition metal, a rare earth element, and a combination thereof, but not Si), Sn, SnO₂, Sn-Y (wherein Y is an element selected from the group consisting of an alkali metal, an alkaline earth metal, a Group 13 element, a Group 14 element, a transition metal, a rare earth element, and a combination thereof, but not Sn), and the like, or at least one thereof may be mixed with SiO₂ and used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may be a lithium-containing titanium composite oxide (LTO), a vanadium oxide, a lithium vanadium oxide, and the like.

The additive according to the present invention is particularly effective when Si or SiOₓ(0<x<2) is used as a negative electrode active material. Specifically, when a Si-based negative electrode active material is used, if a robust SEI layer is not formed on the surface of a negative electrode during initial activation, degradation in lifespan properties is accelerated due to extreme volume expansion-contraction during a cycle. However, the additive according to the present invention is capable of forming an elastic, yet robust SEI layer, and thus, may improve the lifespan properties and storage properties of a secondary battery using an Si-based negative electrode active material.

Among these, the negative electrode active material may be a mixture of graphite and SiOₓ(0≤x<2). In terms of increasing the capacity of the lithium secondary battery, the graphite and SiOₓ(0≤x<2) may be included at a weight ratio of 97 : 3 to 90 : 10.

The negative electrode active material may be included in an amount of 60 to 99 wt%, preferably 70 to 99 wt%, more preferably 80 to 98 wt%, based on the total weight of solids in the negative electrode mixture slurry.

Examples of the binder may include polyvinylidene fluoride (PVDF), polyvinyl alcohol, starch, hydroxypropyl cellulose, regenerated cellulose, polyvinylpyrrolidone, polytetrafluoroethylene, polyethylene, polypropylene, an ethylene-propylene-diene monomer, a sulfonated ethylene-propylene-diene monomer, styrene-butadiene rubber, fluorine rubber, and various copolymers thereof. Specifically, styrene butadien rubber (SBR)-carboxyl methyl cellulose (CMC) may be used in terms of high thickening properties.

Typically, the binder may be included in an amount of 1 to 20 wt%, preferably 1 to 15 wt%, more preferably 1 wt% to 10 wt%, based on the total weight of solids excluding the solvent in the negative electrode mixture slurry.

The conductive material is a component for further improving the conductivity of the negative electrode active material, and may be added in an amount of 1 to 20 wt% based on the total weight of solids in the negative electrode mixture slurry. The conductive material is not particularly limited as long as it has conductivity without causing a chemical change in the battery, and for example, carbon powder such as carbon black, acetylene black, Ketjen black, channel black, furnace black, lamp black, or thermal black; graphite powder such as natural graphite, artificial graphite, graphite, or the like, which has a very developed crystal structure; conductive fiber such as carbon fiber or metal fiber; conductive powder such as fluorocarbon powder, aluminum powder, and nickel powder; a conductive whisker such as zinc oxide and potassium titanate; a conductive metal oxide such as titanium oxide; a conductive material such as a polyphenylene derivative, and the like may be used.

The conductive material may be included in an amount of 1 to 20 wt%, preferably 1 to 15 wt%, more preferably 1 to 10 wt%, based on the total weight of solids excluding the solvent in the negative electrode mixture slurry.

The solvent may include water, or an organic solvent such as N-methyl-2-pyrrolidone (NMP), and may be used in an amount such that a preferred viscosity is achieved when the negative electrode active material, and selectively a binder, a conductive material, and the like are included. For example, the solvent may be included in an amount such that the concentration of solids including the negative electrode active material, and selectively, a binder and a conductive material, is 50 wt% to 95 wt%, preferably 70 wt% to 95 wt%, preferably 70 wt% to 90 wt%.

When a metal itself is used as the negative electrode, the negative electrode may be manufactured by physically bonding, roll-pressing, or depositing a metal on a metal thin film itself or the negative electrode current collector. The depositing method may be electrical vapor deposition or chemical vapor deposition.

For example, the metal thin film itself, or the metal bonded/roll-pressed/deposited on the negative electrode current collector may be one metal selected from the group consisting of lithium (Li), nickel (Ni), tin (Sn), copper (Cu), and indium (In), or an alloy of two metals thereof.

### (3) Separator

In addition, as the separator, a common porous polymer film typically used as a separator, for example, a porous polymer film made of a polyolefin-based polymer, such as an ethylene homopolymer, a propylene homopolymer, an ethylene/butene copolymer, an ethylene/hexene copolymer, and an ethylene/methacrylate copolymer may be used alone, or a laminate thereof may be used. Alternatively, a common porous non-woven fabric, for example, a non-woven fabric made of glass fiber having a high melting point or polyethylene terephthalate fiber may be used, but the present invention is not limited thereto. Also, a coated separator including a ceramic component or a polymer material may be used to secure heat resistance or mechanical strength, and may be selectively used in a single-layered or a multi-layered structure.

Specifically, separators included in an electrode assembly of the present invention may be a safety reinforced separator (SRS) in which a coating layer containing a ceramic component or a polymer material is formed to secure heat resistance or mechanical strength.

Specifically, the separators included in the electrode assembly of the present invention include a porous separator substrate, and a porous coating layer entirely coated on one surface or both surfaces of the separator substrate, wherein the coating layer may include a mixture of inorganic particles selected from a metal oxide, a metalloid oxide, a metal fluoride, a metal hydroxide, and a combination thereof, and a binder polymer for connecting and fixing the inorganic particles to each other.

The coating layer may include, as the inorganic particles, one or more selected from Al₂O₃, SiO₂, TiO₂, SnO₂, CeO₂, MgO, NiO, CaO, ZnO, ZrO₂, Y₂O₃, SrTiO₃, BaTiO₃, Mg(OH)₂, and MgF. Here, the inorganic particles may improve thermal stability of the separator. That is, the inorganic particles may prevent the separator from shrinking at high temperatures. In addition, the binder polymer may improve mechanical stability of the separator by fixing the inorganic particles.

The external shape of the lithium secondary battery of the present invention is not particularly limited, but may be a cylindrical shape using a can, a square shape, a pouch shape, a coin shape, or the like.

Hereinafter, the present invention will be described in more detail with reference to specific examples. However, the following examples are for illustrative purposes only to facilitate the understanding of the present invention, and do not limit the scope of the present invention. It will be apparent to those skilled in the art that various changes and modifications can be made without departing from the scope and spirit of the invention, and it is obvious that such variations and modifications are within the scope of the appended claims.

### Examples

### Example 1

### (Preparation of non-aqueous electrolyte)

A non-aqueous solvent was prepared by dissolving LiPF₆ to 1.2 M in an organic solvent (ethylene carbonate (EC) : propylene carbonate (PC) : ethylene propionate (EP) : propyl propionate (PP) = 20 : 10 : 25 : 45 volume ratio), and to 98.5 g of the non-aqueous solvent, 0.5 g of hexamethylene diisocyanate and 1 g of lithium difluoro(oxalato)borate (LiODFB) were introduced to prepare a non-aqueous electrolyte.

### (Manufacturing of lithium secondary battery)

A positive electrode active material (LiCoO₂) : a conductive material (carbon black) : a binder (polyvinylidene fluoride) were added at a weight ratio of 97.5 : 1.3 : 1.2 to N-methyl-2-pyrrolidone (NMP), which is a solvent, to prepare a positive electrode slurry (solid content of 74 wt%). The positive electrode slurry was applied on one surface of a positive electrode current collector (Al thin film) having a thickness of 15 µm, dried and roll-pressed to manufacture a positive electrode.

A negative electrode active material (graphite:SiO = 92:8 weight ratio) : a conductive material (carbon black) : a binder (polyvinylidene fluoride) were added at a weight ratio of 96.8 : 0.2 : 3.0 to N-methyl-2-pyrrolidone (NMP), which is a solvent, to prepare a negative electrode slurry (solid content of 62 wt%). The negative electrode slurry was applied on one surface of a negative electrode current collector (Cu thin film) having a thickness of 15 µm, dried and roll-pressed to manufacture a negative electrode.

In a dry room, a polyolefin-based porous separator on which inorganic particles Al₂O₃ were applied was interposed between the positive electrode and the negative electrode manufactured above, and then the prepared non-aqueous electrolyte was injected thereto to manufacture a secondary battery.

### Example 2

A secondary battery was manufactured in the same manner as in Example 1 above except that 1 g of hexamethylene diisocyanate and 1 g of lithium difluoro(oxalato)borate (LiODFB) were introduced to 98 g of the non-aqueous solvent prepared in Example 1 above to prepare a non-aqueous electrolyte.

### Example 3

A secondary battery was manufactured in the same manner as in Example 1 above except that 2 g of hexamethylene diisocyanate and 1 g of lithium difluoro(oxalato)borate (LiODFB) were introduced to 97 g of the non-aqueous solvent prepared in Example 1 above to prepare a non-aqueous electrolyte.

### Example 4

A secondary battery was manufactured in the same manner as in Example 1 above except that 0.5 g of hexamethylene diisocyanate and 1 g of lithium difluoro(oxalato)borate (LiODFB) were introduced to 97.5 g of the non-aqueous solvent prepared in Example 1 above to prepare a non-aqueous electrolyte.

### Example 5

A secondary battery was manufactured in the same manner as in Example 1 above except that 2 g of hexamethylene diisocyanate and 0.5 g of lithium difluoro(oxalato)borate (LiODFB) were introduced to 97.5 g of the non-aqueous solvent prepared in Example 1 above to prepare a non-aqueous electrolyte.

### Comparative Example 1

A secondary battery was manufactured in the same manner as in Example 1 above except that 100 g of the non-aqueous solvent prepared in Example 1 above was used to prepare a non-aqueous electrolyte.

### Comparative Example 2

A secondary battery was manufactured in the same manner as in Example 1 above except that 0.5 g of hexamethylene diisocyanate was introduced to 99.5 g of the non-aqueous solvent prepared in Example 1 above to prepare a non-aqueous electrolyte.

### Comparative Example 3

A secondary battery was manufactured in the same manner as in Example 1 above except that 1 g of lithium difluoro(oxalato)borate (LiODFB) was introduced to 99 g of the non-aqueous solvent prepared in Example 1 above to prepare a non-aqueous electrolyte.

### Comparative Example 4

A non-aqueous solvent was prepared by dissolving LiPF₆ to 1.2 M in an organic solvent (ethylene carbonate (EC) : ethyl methyl carbonate (EMC) : dimethyl carbonate (DMC) = 30 : 30 : 40 volume ratio), and to 98.5 g of the non-aqueous solvent, 0.5 g of hexamethylene diisocyanate and 1 g of lithium difluoro(oxalato)borate (LiODFB) were introduced to prepare a non-aqueous electrolyte.

A secondary battery was manufactured in the same manner as Example 1 above, except that the above non-aqueous electrolyte was used.

### Experimental Example 1 - Identification of Co elution amount though ICP analysis

For each of the secondary batteries manufactured in Examples 1 to 5 and Comparative Examples 1 to 4, an amount of Co elution D₀ was measured, and an amount of Co elution Dₜ after 8 hours of storage at 85 °C was measured.

Specifically, for each of the batteries manufactured in Examples 1 to 5 and Comparative Examples 1 to 4, the amount of CO elution was analyzed using an ICP analysis method before and after 8 hours of storage at 85 °C.

**[Table 1]**

| | Dₜ/D₀ |
|---|---|
| Example 1 | 2.40 |
| Example 2 | 2.04 |
| Example 3 | 1.76 |
| Example 4 | 2.54 |
| Example 5 | 1.56 |
| Comparative Example 1 | 13.5 |
| Comparative Example 2 | 6.3 |
| Comparative Example 3 | 13.0 |
| Comparative Example 4 | 7.8 |

### Experimental Example 2 - Identification of pH of electrolyte

For each of the secondary batteries manufactured in Examples 1 to 5 and Comparative Examples 1 to 4, the pH of the non-aqueous electrolyte measured after 1 week of storage at 60°C was measured.

**[Table 2]**

| | pH |
|---|---|
| Example 1 | 4.5 |
| Example 2 | 4.7 |
| Example 3 | 5.1 |
| Example 4 | 4.3 |
| Example 5 | 5.0 |
| Comparative Example 1 | 2.8 |
| Comparative Example 2 | 4.1 |
| Comparative Example 3 | 3.2 |
| Comparative Example 4 | 3.8 |

### Experimental Example 3 - Evaluation of high-temperature cycle properties

For each of the secondary batteries manufactured in Examples 1 to 5 and Comparative Examples 1 to 4, cycle properties were evaluated.

Specifically, each of the batteries manufactured in Examples 1 to 5 and Comparative Example 1 to 4 above was charged to 4.5 V with a constant current of 0.5 C at 45 °C, and then discharged to 3.0 V with a constant current of 0.5 C, which was set to one cycle, and then 200 cycles of the charge/discharge were performed to measure the capacity retention rate based on the initial capacity after 1 cycle was measured. The results are shown in Table 3 below.

**[Table 3]**

| | Capacity retention rate (%) |
|---|---|
| Example 1 | 93.2 |
| Example 2 | 91.8 |
| Example 3 | 89.3 |
| Example 4 | 93.0 |
| Example 5 | 90.1 |
| Comparative Example 1 | 85.6 |
| Comparative Example 2 | 86.8 |
| Comparative Example 3 | 87.1 |
| Comparative Example 4 | 85.7 |

As shown in Table 3, Examples 1 to 5 using a combination of the diisocyanate-based additive of Formula 1 and LiODFB had a high capacity retention rate, and thus, were excellent in lifespan properties compared to the secondary batteries of Comparative Example 1, which includes neither the additive of Formula 1 nor LiODFB, Comparative Example 2, which does not include LiODFB, and Comparative Example 3, which does not include the additive of Formula 1.

In addition, Examples 1 to 5 using the non-aqueous electrolyte including the organic solvent of ethylene carbonate (EC), propylene carbonate (PC), ethylene propionate (EP) and propyl propionate (PP) had a high capacity retention rate, and thus, were excellent in lifespan properties compared to Comparative Example 4 using a combination of ethylene carbonate (EC), ethyl methyl carbonate (EMC), and dimethyl carbonate (DMC).

### Experimental Example 4 - Evaluation of high-temperature storage properties

For each of the secondary batteries manufactured in Examples 1 to 5 and Comparative Examples 1 to 4, high-temperature storage properties were evaluated.

Specifically, the secondary batteries of Examples 1 to 5 and Comparative Examples 1 to 4 above were each fully charged to 4.5 V, and then stored at 85 °C for 8 hours.

Before the storage, the capacity of each of the fully-charged secondary batteries was measured and then set to an initial capacity of the secondary battery.

After the 8 hours, the capacity of each of the stored secondary batteries was measured to calculate a capacity decreased during the storage period. The percentage ratio of the decreased capacity to the initial capacity of the secondary battery was calculated to derive a capacity retention rate after the 8 hours. The results are shown in Table 4 below.

**[Table 4]**

| | Capacity retention rate (%) |
|---|---|
| Example 1 | 92.4 |
| Example 2 | 92.6 |
| Example 3 | 92.1 |
| Example 4 | 91.8 |
| Example 5 | 93.2 |
| Comparative Example 1 | 86.8 |
| Comparative Example 2 | 90.1 |
| Comparative Example 3 | 88.3 |
| Comparative Example 4 | 85.6 |

As shown in Table 4 above, Examples 1 to 5 using a combination of the diisocyanate-based additive of Formula 1 and LiODFB had a high capacity retention rate after high-temperature storage, and thus, showed stable performance at high temperatures compared to the secondary batteries of Comparative Example 1, which includes neither the additive of Formula 1 nor LiODFB, Comparative Example 2, which does not include LiODFB, and Comparative Example 3, which does not include the additive of Formula 1.

In addition, Examples 1 to 5 using the non-aqueous electrolyte including the organic solvent of ethylene carbonate (EC), propylene carbonate (PC), ethylene propionate (EP) and propyl propionate (PP) had a high capacity retention rate after high-temperature storage, and thus, showed stable performance at high temperatures compared to Comparative Example 4 using a combination of ethylene carbonate (EC), ethyl methyl carbonate (EMC), and dimethyl carbonate (DMC).

The present application is a divisional application from EP Application No. 23 860 912.7. The whole subject matter of that application is incorporated herein by reference. The subject matter defined by the original claims of EP Application No. 23 860 912.7is disclosed again below by way of preferred embodiments [1] to [11]:

### PREFERRED EMBODIMENTS

1. A non-aqueous electrolyte comprising a lithium salt, an organic solvent, and an additive, wherein:
   the additive includes a compound represented by Formula 1 below and lithium difluoro(oxalato)borate (LiODFB); and
   the organic solvent includes ethylene carbonate (EC), propylene carbonate (PC), ethylene propionate (EP), and propyl propionate (PP): 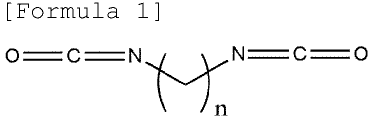
   wherein in Formula 1 above, n is an integer of 3 to 10.
2. The non-aqueous electrolyte of embodiment1, wherein n of Formula 1 above is an integer of 3 to 8.
3. The non-aqueous electrolyte of embodiment1, wherein the lithium salt comprises LiPF₆.
4. The non-aqueous electrolyte of embodiment1, wherein the compound represented by Formula 1 above is included in 0.1 wt% to 5 wt% based on the total non-aqueous electrolyte.
5. The non-aqueous electrolyte of embodiment1, wherein the lithium difluoro(oxalato)borate (LiODFB) is included in 0.1 wt% to 5 wt% based on the total non-aqueous electrolyte.
6. The non-aqueous electrolyte of embodiment1, wherein the weight ratio of the compound represented by Formula 1 above and the lithium difluoro(oxalato)borate (LiODFB) is 0.2 : 1 to 5 : 1.
7. A lithium secondary battery comprising:
   a positive electrode;
   a negative electrode; and
   the non-aqueous electrolyte of any one of embodiments1 to 6, wherein the lithium secondary battery has an upper limit of operating voltage of 4.47 V or greater.
8. The lithium secondary battery of embodiment7, wherein the positive electrode comprises a lithium cobalt-based oxide as a positive electrode active material.
9.The lithium secondary battery of embodiment7, wherein the negative electrode comprises graphite and SiOₓ(0≤x<2) as a negative electrode active material.
10. The lithium secondary battery of embodiment7, wherein the lithium secondary battery satisfies Equation (1) below: ${D}_{t} / {D}_{0} < 5$ wherein in Equation 1 above, Dₜ is an amount of CO elution in the non-aqueous electrolyte measured after the lithium secondary battery is stored at a high temperature of 85 °C for 8 hours, and D₀ is an amount of CO elution in the non-aqueous electrolyte of the lithium secondary battery before the storage at a high temperature.
11. The lithium secondary battery of embodiment7, wherein the pH of the non-aqueous electrolyte measured after storing the lithium secondary battery at 60 °C for 1 week is greater than 4.

## Claims

1. A non-aqueous electrolyte comprising a lithium salt, an organic solvent, and an additive, wherein:
the additive includes a compound represented by Formula 1 below and lithium difluoro(oxalato)borate (LiODFB); and
the organic solvent includes ethylene carbonate (EC) and propylene carbonate (PC): 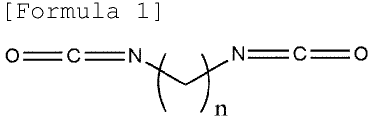
wherein in Formula 1 above, n is an integer of 3 to 10.

2. The non-aqueous electrolyte of claim 1, wherein n of Formula 1 above is an integer of 3 to 8.

3. The non-aqueous electrolyte of claim 1, wherein the lithium salt comprises LiPF₆.

4. The non-aqueous electrolyte of claim 1, wherein the compound represented by Formula 1 above is included in 0.1 wt% to 5 wt% based on the total non-aqueous electrolyte.

5. The non-aqueous electrolyte of claim 1, wherein the lithium difluoro(oxalato)borate (LiODFB) is included in 0.1 wt% to 5 wt% based on the total non-aqueous electrolyte.

6. The non-aqueous electrolyte of claim 1, wherein the weight ratio of the compound represented by Formula 1 above and the lithium difluoro(oxalato)borate (LiODFB) is 0.2 : 1 to 5 : 1.

7. A lithium secondary battery comprising:
a positive electrode;
a negative electrode; and
the non-aqueous electrolyte of any one of claims 1 to 6, wherein the lithium secondary battery has an upper limit of operating voltage of 4.47 V or greater.

8. The lithium secondary battery of claim 7, wherein the positive electrode comprises a lithium cobalt-based oxide as a positive electrode active material.

9. The lithium secondary battery of claim 7, wherein the negative electrode comprises graphite and SiOₓ(0≤x<2) as a negative electrode active material.

10. The lithium secondary battery of claim 7, wherein the lithium secondary battery satisfies Equation (1) below: ${D}_{t} / {D}_{0} < 5$ wherein in Equation 1 above, Dₜ is an amount of Co elution in the non-aqueous electrolyte measured after the lithium secondary battery is stored at a high temperature of 85 °C for 8 hours, and D₀ is an amount of Co elution in the non-aqueous electrolyte of the lithium secondary battery before the storage at a high temperature.

11. The lithium secondary battery of claim 7, wherein the pH of the non-aqueous electrolyte measured after storing the lithium secondary battery at 60 °C for 1 week is greater than 4.
